# EUROPEAN PATENT SPECIFICATION

(11) **EP 3 657 370 B1**
(45) Date of publication and mention of the grant of the patent: **29.11.2023**
(21) Application number: 19203665.5
(22) Date of filing: 16.10.2019
(51) Int. Cl.: H04L 9/40, G06F 21/35, H04W 12/04, H04W 12/06, G07C 9/00

(54) **METHODS AND DEVICES FOR AUTHENTICATING SMART CARD**
VERFAHREN UND VORRICHTUNGEN ZUR AUTHENTIFIZIERUNG EINER CHIPKARTE
PROCÉDÉS ET DISPOSITIFS POUR L'AUTHENTIFICATION D'UNE CARTE INTELLIGENTE

(30) Priority: 23.11.2018 CN 201811410112
(43) Date of publication of application: 27.05.2020
(73) Proprietor: Beijing Xiaomi Mobile Software Co., Ltd., Beijing 100085 (CN)
(72) Inventor: XIE, Rongkang, Haidian District, Beijing 100085 (CN)
(74) Representative: Hughes, Andrea Michelle

(56) References cited:
- EP-A1- 2 380 149
- CN-A- 104 933 797
- CN-A- 105 184 929
- CN-A- 107 978 047

## Description

### TECHNICAL FIELD

The present disclosure relates to the technical field of Internet of Things, and more particularly, to methods and devices for authenticating a smart card.

### BACKGROUND

With the development of the Internet of Things technology, the concept of smart life has gradually entered the user's life, and the demand for smart home products is increasing. Among many smart home products, smart locks have unique application scenarios and are widely used in apartments, houses, office buildings and other scenarios. As the key of the smart lock, the smart card realizes the authentication by interacting with the smart lock, and then the smart lock can be quickly opened based on the authenticated smart card. Compared with the conventional unlocking method, this method is more convenient and safer.

At present, the smart lock mainly authenticates the smart card based on a preset unlocking key, which requires that the smart lock manufacturer presets the unlocking key before the smart lock is shipped from the factory, and a fixed management terminal writes the set unlocking key into the smart card after leaving the factory. The smart card is then distributed to individual users.

### SUMMARY

According to a first aspect of the present disclosure, there is provided a method for authenticating a smart card as defined by claim 1.

In one embodiment, the method further includes:
acquiring a digital certificate requested from the smart card;
verifying the digital certificate to obtain a public key of the smart card; and
encrypting the generated unlocking key by using the public key;
wherein the sending the generated unlocking key to the smart card includes:
   sending the encrypted unlocking key to the smart card; and
   the determining the smart card to be the authenticated smart card in response to receiving the feedback information of the smart card includes:
      in response to receiving feedback information that the smart card successfully decrypts the encrypted unlocking key by a private key corresponding to the public key, determining the smart card to be the authenticated smart card.

In one embodiment, before sending the generated unlocking key to the smart card, the method further includes:
sending a generated transport key to the smart card; and
acquiring a first random number generated by the smart card;
the sending the generated unlocking key to the smart card includes:
   performing an encryption processing on the generated unlocking key based on the transport key and the first random number to obtain first encrypted information; and
   sending the first encrypted information to the smart card; and
   the determining the smart card to be the authenticated smart card in response to receiving the feedback information of the smart card, includes:
      in response to receiving feedback information that the smart card decrypts and verifies the first encrypted information successfully, determining the smart card to be the authenticated smart card.

In one embodiment, the method further includes:
acquiring a digital certificate requested from the smart card; and
verifying the digital certificate to obtain a public key of the smart card;
wherein the sending the generated transport key to the smart card includes:
   encrypting the transport key by using the public key to obtain second encrypted information; and
   sending the second encrypted information to the smart card.

In one embodiment, the acquiring the first random number of the smart card includes:
receiving third encrypted information sent by the smart card, the third encrypted information being obtained by the smart card by using the transport key to encrypt the generated first random number; and
decrypting the third encrypted information by using the transport key to obtain the first random number.

In one embodiment, before determining whether the smart card satisfies the first authentication condition, the method further includes:
receiving an authentication trigger instruction from a third-party application; and
establishing a connection with the smart card.

In one embodiment, after determining the smart card to be the authenticated smart card, the method further includes:
determining whether the smart card satisfies a second authentication condition;
in response to the determination that the smart card satisfies the second authentication condition, acquiring an external authentication result of the smart lock by the smart card;
in response to the external authentication result being that the authentication is passed, authenticating the smart card to obtain an internal authentication result; and
in response to the internal authentication result being that the authentication is passed, controlling the smart lock to be opened.

In one embodiment, the determining whether the smart card satisfies the second authentication condition includes:
acquiring the authentication information requested from the smart card, the authentication information including a card identifier and a card status of the smart card; and
when it is determined that the card status is a keyed state, and the card identifier indicates that the smart card is an authenticated smart card, determining that the smart card satisfies the second authentication condition.

In one embodiment, the acquiring the external authentication result of the smart lock by the smart card in response to the determination that the smart card satisfies the second authentication condition, includes:
sending a second random number acquisition request to the smart card, the second random number acquisition request being used by the smart card to generate and return a second random number;
receiving the second random number;
encrypting the second random number by using an external authentication key in a pre-stored unlocking key to obtain fourth encrypted information;
sending the fourth encrypted information to the smart card, the fourth encrypted information being used by the smart card to perform decryption using the external authentication key in the pre-stored unlocking key to obtain the second random number, and verifying the second random number to obtain and return the external authentication result; and
receiving the external authentication result sent by the smart card.

In one embodiment, the authenticating the smart card to obtain the internal authentication result in response to the external authentication result being that the authentication is passed, includes:
sending the generated third random number to the smart card, the third random number being used by the smart card to perform encryption by using an internal authentication key in a pre-stored unlocking key to obtain and return fifth encrypted information;
receiving the fifth encrypted information;
decrypting the fifth encrypted information by using the internal authentication key in the pre-stored unlocking key to obtain the third random number; and
verifying the third random number to obtain the internal authentication result.

According to a second aspect of the present disclosure, there is provided a method for authenticating a smart card as defined by claim 11.

In one embodiment, the method further includes:
in response to a request instruction for digital certificate, sending a digital certificate to the smart lock;
wherein the digital certificate is verified by the smart lock to obtain a public key of the smart card, and the public key is used to encrypt a generated unlocking key;
the receiving the unlocking key sent by the smart lock, includes:
   receiving an encrypted unlocking key sent by the smart lock;
   the method further includes:
      decrypting the encrypted unlocking key by a private key corresponding to the public key; and
      the sending the feedback information to the smart lock includes:
         sending feedback information of successful decryption to the smart lock.

In one embodiment, before sending the feedback information to the smart lock, the method further includes:
receiving a transport key sent by the smart lock; and
sending a generated first random number to the smart lock;
wherein the smart lock performs an encryption processing on the generated unlocking key based on the transport key and the first random number to obtain and return first encrypted information;
the receiving the unlocking key sent by the smart lock includes:
   receiving first encrypted information sent by the smart lock; and
   the sending the feedback information to the smart lock includes:
      decrypting the first encrypted information based on the transport key and the generated first random number, and generating feedback information of successful verification.

In one embodiment, the method further includes:
in response to a request instruction for digital certificate, sending a digital certificate to the smart lock, the digital certificate being verified by the smart lock to obtain a public key of the smart card, and the public key being used for encrypting the generated transport key to obtain second encrypted information;
the receiving the transport key sent by the smart lock includes:
   receiving the second encrypted information sent by the smart lock; and
   the method further includes:
      decrypting the second encrypted information by a private key corresponding to the public key to obtain a transport key.

In one embodiment, the sending the generated first random number to the smart lock includes:
encrypting the generated first random number by using the transport key to obtain third encrypted information; and
sending the third encrypted information to the smart lock.

In one embodiment, the method further includes:
providing authentication information to the smart lock;
in response to that the smart card satisfies a second authentication condition, performing an external authentication on the smart lock to obtain an external authentication result; and
in response to the external authentication result being that the authentication is passed, acquiring an internal authentication result of the smart card by the smart lock, the internal authentication result being used to control the smart lock to be opened when the authentication result is that the authentication is passed.

In one embodiment, the providing the authentication information to the smart lock includes:
in response to a request instruction for authentication information, sending the authentication information to the smart lock;
wherein the authentication information includes a card identifier and a card status of the smart card, and the authentication information is used by the smart lock to determine that the smart card satisfies the second authentication condition when the card status is a keyed state, and the card identifier is located in a white list, the card identifier being located in the white list indicating that the smart card is an authenticated smart card.

In one embodiment, the performing the external authentication on the smart lock to obtain the external authentication result includes:
receiving a second random number acquisition request sent by the smart lock;
generating a second random number;
sending the second random number to the smart lock, the second random number being encrypted by the smart lock using an external authentication key in a pre-stored unlocking key to obtain and return fourth encrypted information;
receiving the fourth encrypted information;
decrypting the fourth encrypted information by using the external authentication key in the pre-stored unlocking key to obtain the second random number; and
verifying the second random number according to the generated second random number to obtain the external authentication result.

In one embodiment, the acquiring the internal authentication result of the smart card by the smart lock in response to the external authentication result being that the authentication is passed, includes:
receiving a third random number sent by the smart lock;
encrypting the third random number by using an internal authentication key in a pre-stored unlocking key to obtain fifth encrypted information; and
sending the fifth encrypted information to the smart lock, the fifth encrypted information being decrypted by the smart lock by using the internal authentication key in the pre-stored unlocking key to obtain the third random number, and verifying the third random number to obtain the internal authentication result.

According to a third aspect of the embodiments of the present disclosure, there is provided a smart lock, including:
a determining module, configured to determine whether a smart card satisfies a first authentication condition according to authentication information provided by the smart card; and
a sending module, configured to, in response to the determination that the smart card satisfies the first authentication condition, send a generated unlocking key to the smart card;
wherein the determining module is configured to, in response to receiving feedback information of the smart card, determine the smart card to be an authenticated smart card.

In one embodiment, the determining module is configured to acquire the authentication information requested from the smart card, the authentication information including a card identifier and a card status of the smart card; and when it is determined that the card status is an unkeyed state and the card identifier includes a specified number segment, determine that the smart card satisfies the first authentication condition.

In one embodiment, the smart lock further includes:
an acquisition module, configured to acquire a digital certificate requested from the smart card;
a verification module, configured to verify the digital certificate to obtain a public key of the smart card; and
an encryption module, configured to encrypt the generated unlocking key by using the public key;
wherein the sending module is configured to send the encrypted unlocking key to the smart card; and
the determining module is configured to, in response to receiving feedback information that the smart card successfully decrypts the encrypted unlocking key through a private key corresponding to the public key, determine the smart card to be the authenticated smart card.

In one embodiment, the smart lock further includes:
the sending module being configured to send a generated transport key to the smart card;
an acquisition module, configured to acquire a first random number generated by the smart card;
the sending module being configured to perform an encryption processing on the generated unlocking key based on the transport key and the first random number to obtain first encrypted information;
the sending module being configured to send the first encrypted information to the smart card; and
the determining module is configured to, in response to receiving feedback information that the smart card decrypts and verifies the first encrypted information successfully, determine the smart card to be the authenticated smart card.

In one embodiment, the smart lock further includes:
the acquisition module being configured to acquire a digital certificate requested from the smart card;
a verification module, configured to verify the digital certificate to obtain a public key of the smart card; and
the sending module being configured to encrypt the transport key by using the public key to obtain second encrypted information, and send the second encrypted information to the smart card.

In one embodiment, the acquisition module is configured to receive third encrypted information sent by the smart card, the third encrypted information being obtained by the smart card by using the transport key to encrypt the generated first random number; and decrypt the third encrypted information by using the transport key to obtain the first random number.

In one embodiment, the smart lock further includes:
a receiving module, configured to receive an authentication trigger instruction from a third-party application; and
a connection module, configured to establish a connection with the smart card.

In one embodiment, the smart lock further includes:
the determining module being configured to determine whether the smart card satisfies a second authentication condition;
an acquisition module, configured to, in response to the determination that the smart card satisfies the second authentication condition, acquire an external authentication result of the smart lock by the smart card;
an authentication module, configured to, in response to the external authentication result being that the authentication is passed, authenticate the smart card to obtain an internal authentication result; and
a control module, configured to, in response to the internal authentication result being that the authentication is passed, control the smart lock to be opened.

In one embodiment, the determining module is configured to acquire the authentication information requested from the smart card, the authentication information including a card identifier and a card status of the smart card; and when it is determined that the card status is a keyed state, and the card identifier indicates that the smart card is an authenticated smart card, determine that the smart card satisfies the second authentication condition.

In one embodiment, the acquisition module is configured to send a second random number acquisition request to the smart card, the second random number acquisition request being used by the smart card to generate and return a second random number; receive the second random number; encrypt the second random number by using an external authentication key in a pre-stored unlocking key to obtain fourth encrypted information; and send the fourth encryption information to the smart card, the fourth encrypted information being used by the smart card to perform decryption using the external authentication key in the pre-stored unlocking key to obtain the second random number, and verify the second random number to obtain and return the external authentication result; and receive the external authentication result sent by the smart card.

In one embodiment, the authentication module is configured to send the generated third random number to the smart card, the third random number being used by the smart card to perform encryption by using an internal authentication key in a stored unlocking key to obtain and return fifth encrypted information; receive the fifth encrypted information; decrypt the fifth encrypted information by using the internal authentication key in the pre-stored unlocking key to obtain the third random number; and verify the third random number to obtain the internal authentication result.

According to a fourth aspect of the embodiments of the present disclosure, there is provided a smart card, including:
an information providing module, configured to provide authentication information to a smart lock;
a receiving module, configured to receive an unlocking key sent by the smart lock, the unlocking key being sent by the smart lock when determining that the smart card satisfies a first authentication condition according to the authentication information; and
a sending module, configured to send feedback information to the smart lock.

In one embodiment, the information providing module is configured to, in response to a request instruction for authentication information, provide the authentication information to the smart lock;
the authentication information includes a card identifier and a card status of the smart card, the authentication information is used by the smart lock to determine that the smart card satisfies the first authentication condition when it is determined that the card status is an unkeyed state and the card identifier includes a specified number segment.

In one embodiment, the sending module is configured to, in response to a request for digital certificate, send a digital certificate to the smart lock;
the digital certificate is verified by the smart lock to obtain a public key of the smart card, and the public key is used to encrypt a generated unlocking key;
the receiving module is configured to receive an encrypted unlocking key sent by the smart lock; and
the smart card further includes:
   a decryption module, configured to decrypt the encrypted unlocking key by using a private key corresponding to the public key; and
   the sending module is configured to send feedback information of successful decryption to the smart lock.

In one embodiment, the receiving module is configured to receive a transport key sent by the smart lock;
the sending module is configured to send a generated first random number to the smart lock;
the smart lock performs an encryption processing on the generated unlock key based on the transport key and the first random number to obtain and return first encrypted information;
the receiving module is configured to receive first encrypted information sent by the smart lock;
the sending module is configured to decrypt the first encrypted information based on the transport key and the generated first random number, and generate feedback information of successful verification.

In one embodiment, the sending module is configured to, in response to a request instruction for digital certificate, send a digital certificate to the smart lock, the digital certificate being verified by the smart lock to obtain a public key of the smart card, and the public key being used for encrypting the generated transport key to obtain second encrypted information;
the receiving module is configured to receive the second encrypted information sent by the smart lock; and
the smart card further includes:
   an acquisition module, configured to decrypt the second encrypted information by a private key corresponding to the public key to obtain a transport key.

In one embodiment, the sending module is configured to encrypt the generated first random number by using the transport key to obtain third encrypted information; and send the third encrypted information to the smart lock.

In one embodiment, the smart card further includes:
the information providing module is configured to provide authentication information to the smart lock;
an authentication module, configured to, in response to that the smart card satisfies a second authentication condition, perform an external authentication on the smart lock to obtain an external authentication result; and
an acquisition module, configured to, in response to the external authentication result being that the authentication is passed, acquire an internal authentication result of the smart card by the smart lock, the internal authentication result being used to control the smart lock to be opened when the authentication result is that the authentication is passed.

In one embodiment, the information providing module is configured to, in response to a request instruction for authentication information, send the authentication information to the smart lock;
the authentication information includes a card identifier and a card status of the smart card, and the authentication information is used by the smart lock to determine that the smart card satisfies the second authentication condition when the card status is a keyed state, and the card identifier is located in a white list, the card identifier being located in the white list indicating that the smart card is an authenticated smart card.

In one embodiment, the authentication module is configured to receive a second random number acquisition request sent by the smart lock; generate a second random number; send the second random number to the smart lock, the second random number being encrypted by the smart lock using an external authentication key in a pre-stored unlocking key to obtain and return fourth encrypted information; receive the fourth encrypted information; decrypt the fourth encrypted information by using the external authentication key in the pre-stored unlocking key to obtain the second random number; and verify the second random number according to the generated second random number to obtain the external authentication result.

In one embodiment, the acquisition module is configured to receive a third random number sent by the smart lock; and encrypt the third random number by using an internal authentication key in a pre-stored unlocking key to obtain fifth encrypted information; and send the fifth encrypted information to the smart lock, the fifth encrypted information being decrypted by the smart lock by using the internal authentication key in the pre-stored unlocking key to obtain the third random number, and verify the third random number to obtain the internal authentication result.

According to a fifth aspect of the embodiments of the present disclosure, there is provided a smart lock system, including: a smart lock provided according to the third aspect and any implementation manner of the third aspect, and at least one smart card provided according to the fourth aspect and any implementation manner of the fourth aspect.

According to a sixth aspect of the embodiments of the present disclosure, there is provided a device for authenticating a smart card, including: a processor; and a memory for storing instructions executable by the processor; wherein the processor is configured to: determine whether the smart card satisfies a first authentication condition according to authentication information provided by the smart card; in response to the determination that the smart card satisfies the first authentication condition, send a generated unlocking key to the smart card; and in response to receiving feedback information of the smart card, determine the smart card to be an authenticated smart card.

According to a seventh aspect of the embodiments of the present disclosure, there is provided a device for authenticating a smart card, including: a processor; a memory for storing instructions executable by the processor; wherein the processor is configured to: provide authentication information to a smart lock; receive an unlocking key sent by the smart lock, the unlocking key being sent by the smart lock when determining that the smart card satisfies a first authentication condition according to the authentication information; and send feedback information to the smart lock.

The technical solutions provided by the embodiments of the present disclosure may include the following beneficial effects.

When it is determined that the smart card satisfies the first authentication condition based on the authentication information provided by the smart card, the generated unlocking key is sent to the smart card, and when the feedback of the smart card is received, the authentication of the smart card is completed, that is, the key distribution process is completed. Compared with the key distribution process in the related art, this process does not require the smart lock manufacturer to preset the unlocking key, nor does it require a third-party, such as a cloud end or a data center, to allocate the unlocking key; instead, the smart lock first authenticates the smart card, and after the authentication is passed, the unlocking key is generated locally by the smart lock itself and assigned to the smart card, which not only reduces the complexity of the production process of the factory, but also reduces the participation of the third-party and has a relatively high security.

In addition, when performing an unlocking operation on the smart lock, the smart lock is interacted with the smart card, so as to complete the authentication to the smart lock by the smart card and the authentication to the smart card by the smart lock, and the smart lock is controlled to be opened when two authentication results are both that the authentication is passed. Based on the above unlocking authentication method, the malicious copy attack is effectively avoided, and the reliability and security of the smart lock are improved.

It is to be understood that both the foregoing general description and the following detailed description are exemplary and explanatory only and are not restrictive of the invention, as claimed. Prior art CN107978047A discloses a method for unlocking a password of a door lock device which involves generating an unlocking password of the door lock device according to an unlocking key, and unlocking the door lock device when the door lock device successfully verifies the unlocking password. The invention is defined by the appended claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram of a smart door lock system according to an exemplary embodiment.
Fig. 2 is a flowchart of a method for authenticating a smart card according to an exemplary embodiment.
Fig. 3 is a flowchart of a method for authenticating a smart card according to an exemplary embodiment.
Fig. 4 is a flowchart of a method for authenticating a smart card according to an exemplary embodiment.
Fig. 5 is a flowchart of a method for authenticating a smart card according to an exemplary embodiment.
Fig. 6 is a flowchart of a method for authenticating a smart card according to an exemplary embodiment.
Fig. 7 is a flowchart of a method for authenticating a smart card according to an exemplary embodiment.
Fig. 8 is a flowchart of a method for authenticating a smart card according to an exemplary embodiment.
Fig. 9 is a flowchart of an unlocking authentication method according to an exemplary embodiment.
Fig. 10 is a flowchart of an unlocking authentication method according to an exemplary embodiment.
Fig. 11 is a flowchart of an unlocking authentication method according to an exemplary embodiment.
Fig. 12 is a block diagram of a smart lock according to an exemplary embodiment.
Fig. 13 is a block diagram of a smart card according to an exemplary embodiment.
Fig. 14 is a block diagram of a device for smart card authentication according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with some aspects related to the present disclosure as recited in the appended claims.

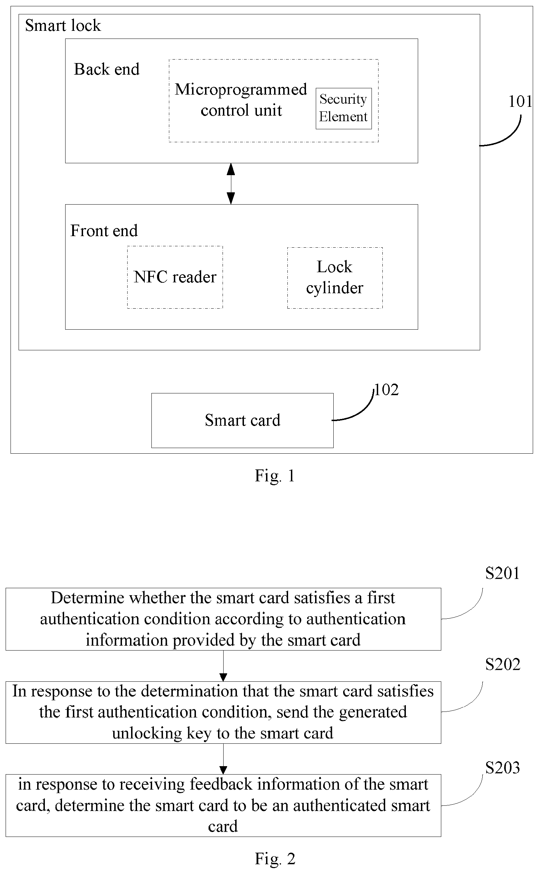

Fig. 1 illustrates a schematic diagram of a smart door lock system according to an embodiment of the present disclosure. Referring to Fig. 1, the smart door lock system includes: a smart lock 101 and a smart card 102.

The smart lock 101 includes a front end and a back end. The front end is composed of a card reader and an electronic lock cylinder, and is configured for data interaction between the back end and the outside world. The card reader may be an NFC (Near-Field Communication) card reader, a Bluetooth card reader, etc., and is configured for data interaction with the smart card 102. On the basis of the original general mechanical lock cylinder, an electronic component that communicates with the external smart card is added in the electronic lock cylinder. The electronic lock cylinder has the function of the general mechanical lock cylinder, and also has the function of electronic identity authentication. The back end is composed of an MCU (Microprogrammed Control Unit) and an SE (Security Element), and is configured for smart card authentication and key distribution. The key distribution is a process of adding a card identifier of a smart card to a white list.

The smart card 102 includes a merchant door card that interacts with the smart lock 101, a smart phone with short-range communication function, a physical key, and the like. The merchant card has two forms: physical card and virtual card. The physical card is customized by the merchant, and the virtual card is stored in an application (APP) of the smart phone. The smart phone with short-range communication function may simulate a virtual card to communicate with the smart lock, so as to transfer configuration information. The physical key has the same appearance as the ordinary key. The physical key differs from the ordinary key in that a security chip is added, and the same function as the merchant door card can be realized. That is, except that the communication link is contact type, the unlocking authentication process is consistent with the merchant door card. The physical key may be understood as another form of the merchant door card. The smart card belongs to a CPU (Central Processing Unit) card, and each smart card has a unique identification code CID and a digital certificate. In one embodiment, the CID may be composed of 16 digits, and the first 6 digits are an identification code of a card issuer (Issuer Identification Number, IIN) for classifying the smart card. The digital certificate is issued by the merchant and is unique to the whole network.

Fig. 2 is a flowchart of a method for authenticating a smart card according to an exemplary embodiment. As shown in Fig. 2, the method for authenticating a smart card may be used in a smart lock, and includes the following steps.

In step S201, it is determined whether the smart card satisfies a first authentication condition according to authentication information provided by the smart card.

The authentication information includes a card identifier and a card status of the smart card. The card status includes both an unkeyed state and a keyed state. When the authentication information provided by the smart card is obtained, the smart lock needs to determine whether the smart card satisfies the first authentication condition. For example, the smart lock may check whether the card status is the unkeyed state, and whether the card identifier includes a specified number segment. If the card status is the keyed state, it indicates that the smart card has been authenticated, then the process ends; if the card status is the unkeyed state, and the specified number segment is not included in the card identifier, it indicates that the card is not the smart card corresponding to the smart lock, then the process ends; and if the card status is the unkeyed state, and the card identifier includes the specified number, then the smart lock determines that the smart card satisfies the first authentication condition. The designated number segment is an identification number of the card issuer, which is used to distinguish different smart cards.

Before acquiring the authentication information provided by the smart card, the smart lock needs to establish a connection with the smart card first. The connection process may be triggered by a third-party application. When the smart lock receives an authentication trigger instruction from the third-party application, the smart lock may establish a connection with the smart card by searching for signals such as Bluetooth, WiFi, infrared, NFC (Near Field Communication), and the like. Further, based on the connection established with the smart card, the smart lock may acquire the authentication information of the smart card.

In step S202, in response to the determination that the smart card satisfies the first authentication condition, a generated unlocking key is sent to the smart card.

In response to that the smart card satisfies the first authentication condition, the smart lock generates an unlocking key according to the card identifier, and then sends the generated unlocking key to the smart card. The unlocking key includes an internal authentication key and an external authentication key. The external authentication key may be a Card Control Key (CCK) for authenticating the smart lock by the smart card during the unlocking process; and the internal authentication key may be an Internal Authentication Key (IAK) for authenticating the smart card by the smart lock during the unlocking process.

In step S203, in response to receiving feedback information of the smart card, the smart card is determined to be an authenticated smart card.

Upon receiving the feedback information sent by the smart card, in response to the received feedback information, the smart lock determines the smart card as an authenticated smart card.

In order to facilitate the search for the authenticated smart card, a white list may be maintained on the side of the smart lock. The white list includes the card identifier of the authenticated smart card. Therefore, when it is determined that the smart card is an authenticated smart card, the smart lock may also add the card identifier of the smart card to the white list.

The method provided by the embodiment of the present disclosure, when determining that the smart card satisfies the first authentication condition based on the authentication information provided by the smart card, sends the generated unlocking key to the smart card, and completes the authentication of the smart card when receiving the feedback of the smart card. The process does not require the smart lock manufacturer to preset the unlocking key, instead, the smart lock first authenticates the smart card, and after the authentication is passed, the smart lock itself generates the unlocking key locally and assigns it to the smart card, which not only reduces the complexity of the production process of the factory, but also reduces the participation of third parties, thereby improving the safety.

Accordingly, the method for authenticating a smart card may be used in a smart card, and includes the following steps.

In step S301, authentication information is provided to the smart lock.

In step S302, an unlocking key sent by the smart lock is received.

The unlocking key is sent by the smart lock when it is determined that the smart card satisfies the first authentication condition according to the authentication information.

In step S303, feedback information is sent to the smart lock.

In response to the received unlocking key, the smart card sends feedback information to the smart lock, the feedback information being used by the smart lock to determine the smart card as an authenticated smart card.

In the method provided by the embodiment of the present disclosure, by providing the smart lock with the authentication information, the smart lock is enabled to determine whether the smart card satisfies the first authentication condition based on the authentication information, and when the smart card is determined to satisfy the first authentication condition, the generated unlocking key is sent to the smart card, and after receiving the unlocking key, the verification is performed, and the feedback information of the verification success is sent to the smart lock, thereby completing the authentication of the smart card. The process does not need to generate an unlocking key in advance, and the authentication is performed in real time based on the authentication information of the smart card and the unlocking key generated by the smart lock, therefore the authentication result is reliable and safe.

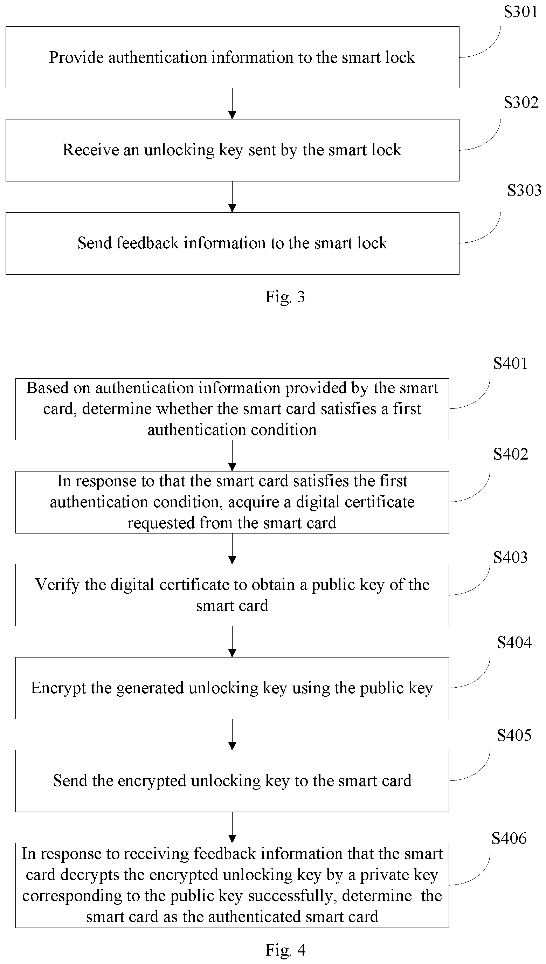

In order to enhance the security of the unlocking key during transmission, Fig. 4 gives a flowchart of a method for authenticating a smart card according to an exemplary embodiment. As shown in Fig. 4, the method for authenticating a smart card is used in a smart lock, and includes the following steps.

In step S401, based on authentication information provided by the smart card, it is determined whether the smart card satisfies a first authentication condition.

In step S402, in response to that the smart card satisfies the first authentication condition, a digital certificate requested from the smart card is acquired.

In response to the smart card satisfying the first authentication condition, the smart lock sends a digital certificate acquiring request to the smart card. When receiving the digital certificate acquiring request, the smart card acquires the digital certificate according to the digital certificate acquiring request, and sends the digital certificate to the smart lock.

In step S403, the digital certificate is verified to obtain a public key of the smart card.

The digital certificate may be issued by the manufacturer and stored on the side of the smart card, and the smart key stores the public key of the issued certificate. Therefore, when receiving the digital certificate, the smart lock verifies the digital certificate based on a Certificate Authority (CA) public key, and may obtain the public key of the smart card.

In step S404, the generated unlocking key is encrypted using the public key.

Based on the obtained public key of the smart card, the smart lock uses the public key to encrypt the generated unlocking key. In this way, the security of the unlocking key during transmission is guaranteed.

In step S405, the encrypted unlocking key is sent to the smart card.

In step S406, in response to receiving feedback information that the smart card decrypts the encrypted unlocking key by the private key corresponding to the public key successfully, the smart card is determined as the authenticated smart card.

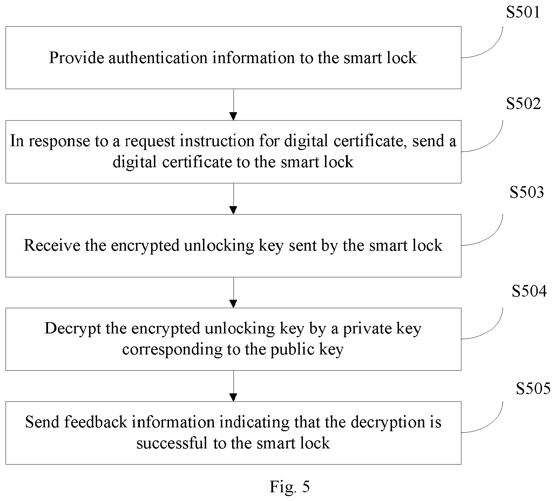

Corresponding to Fig. 4, the method for authenticating a smart card may also be applied to the smart card, and includes the following steps shown in Fig. 5.

In step S501, authentication information is provided to the smart lock.

In step S502, in response to a request instruction for a digital certificate, the digital certificate is sent to the smart lock.

In step S503, the encrypted unlocking key sent by the smart lock is received.

In step S504, the encrypted unlocking key is decrypted by a private key corresponding to the public key.

In step S505, feedback information indicating that the decryption is successful is sent to the smart lock.

After successfully decrypting the encrypted unlocking key by using the private key corresponding to the public key, the smart card sends the feedback information of decryption success to the smart lock, and the feedback information is used for the smart lock to determine the smart card as the authenticated smart card.

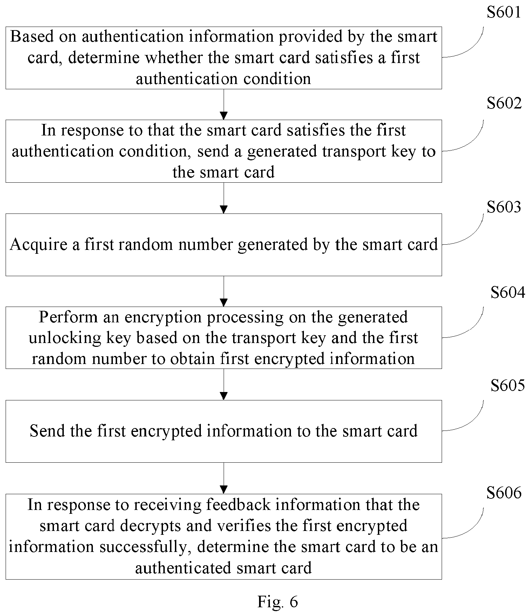

In order to further enhance the security of the unlocking key in the transmission process, a special transport key may be generated. Fig. 6 is a flowchart of a method for authenticating a smart card according to an exemplary embodiment. As shown in Fig. 6, the method is used in a smart lock and includes the following steps.

In step S601, based on authentication information provided by the smart card, it is determined whether the smart card satisfies a first authentication condition.

In step S602, in response to that the smart card satisfies the first authentication condition, a generated transport key is sent to the smart card.

In response to the determination that the smart card satisfies the first authentication condition, the smart lock may randomly generate a transport key and send the transport key to the smart card. The transport key may be represented by a Card Transport Key (CTK).

In step S603, a first random number generated by the smart card is acquired.

In step S604, an encryption processing is performed on the generated unlocking key based on the transport key and the first random number to obtain first encrypted information.

The smart lock encrypts the generated unlocking key by using the transport key and the first random number, and then performs Message Authentication Code (MAC) calculation on the encrypted information to obtain first encrypted information including the MAC verification information.

In step S605, the first encrypted information is sent to the smart card.

In step S606, in response to receiving feedback information that the smart card decrypts and verifies the first encrypted information successfully, the smart card is determined to be an authenticated smart card.

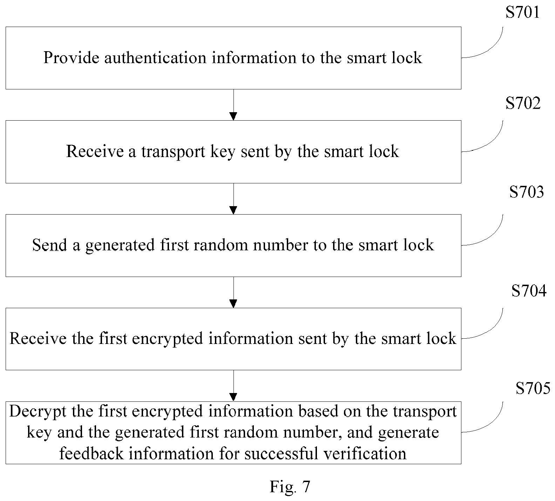

Corresponding to Fig. 6, the method for authenticating a smart card may also be used in the smart card, and includes the following steps shown in Fig. 7.

In step S701, authentication information is provided to the smart lock.

In step S702, a transport key sent by the smart lock is received.

In step S703, a generated first random number is sent to the smart lock.

Based on the acquired transport key, the smart card randomly generates a first random number and transmits the first random number to the smart lock. Alternatively and/or additionally, the smart card may also obtain an Initialization Vector (IV) of the first random number, and then send the IV of the first random number to the smart lock.

In step S704, the first encrypted information sent by the smart lock is received.

In step S705, the first encrypted information is decrypted based on the transport key and the generated first random number, and feedback information for successful verification is generated.

For the received first encrypted information, the smart card decrypts the first encrypted information by using the generated first random number and the pre-stored transport key, obtains an unlocking key, and performs MAC calculation on the unlocking key to obtain MAC verification information, then compares the MAC verification information with MAC verification information generated at the side of the smart lock. If the MAC verification information is the same as the MAC verification information generated at the side of the smart lock, it is determined that the verification succeeds, and feedback information indicating the successful verification is sent to the smart lock.

In another embodiment of the present disclosure, in order to improve the security of the sent transport key, the smart lock also acquires the digital certificate requested from the smart card, verifies the digital certificate to obtain the public key of the smart card, encrypts the transport key using the public key to obtain second encrypted information, and then sends the second encrypted information to the smart card. When receiving the second encrypted information, the smart card decrypts the second encrypted information by using a private key corresponding to the public key to obtain the transport key.

In another embodiment of the present disclosure, in order to improve the security of the sent first random number, the smart card further encrypts the generated first random number by using the transport key to obtain third encrypted information, and then sends the third encrypted message to the smart lock. When receiving the third encrypted information sent by the smart card, the smart lock decrypts the third encrypted information by using the transport key to obtain a first random number. Alternatively and/or additionally, the smart card may also obtain the IV of the first random number, and encrypt the IV of the first random number by using the transport key to obtain the third encrypted information, and then send the third encrypted information to the smart lock. When receiving the third encrypted information sent by the smart card, the smart lock decrypts the third encrypted information by using the transport key to obtain the IV of the first random number.

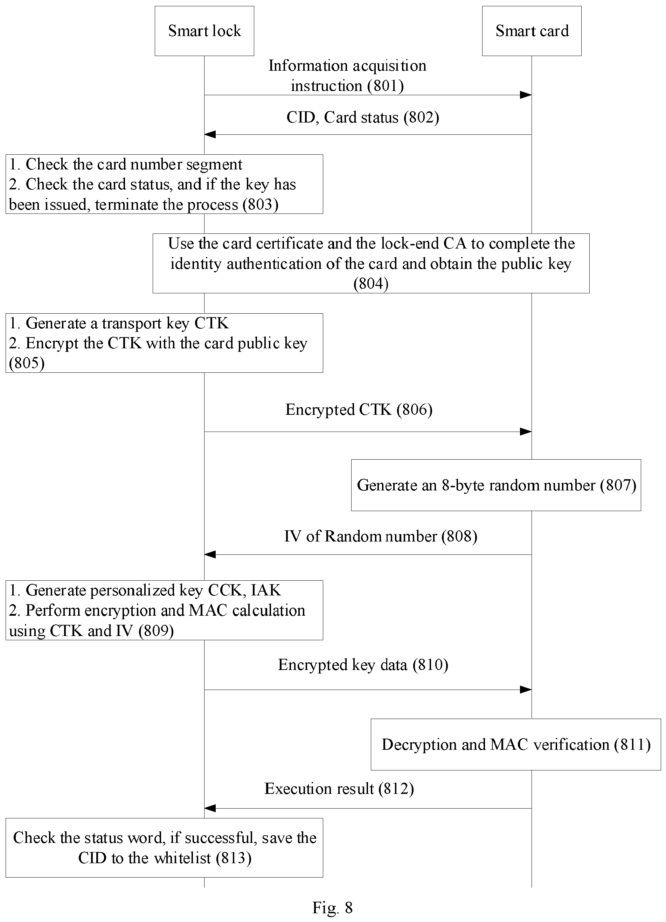

The above authentication method for the smart card will be described below with reference to Fig. 8 by taking an interaction process between the smart card and the smart lock as an example.

Referring to Fig. 8, the smart lock sends to the smart card an information acquisition instruction for requesting authentication information (801). When receiving the information acquisition instruction, the smart card acquires the CID and the card status of the smart card, and sends the CID and the card status to the smart lock (802). The smart lock checks whether a card number segment of the CID includes a specified number segment, and checks whether the card status is an unkeyed state (803). When the card number segment of the CID includes the specified number segment and the card status is the unkeyed state, the smart lock sends a digital certificate acquisition instruction to the smart card. Upon receiving the digital certificate acquisition instruction, the smart card acquires the digital certificate and sends the digital certificate to the smart lock. The smart lock uses the CA public key to verify the digital certificate, obtains the public key of the smart card (804), and generates a CTK, and then uses the public key of the smart card to encrypt the CTK (805) and sends the encrypted CTK to the smart card (806). The smart card decrypts the encrypted CTK with the private key corresponding to the public key to obtain the CTK, then generates an 8-byte random number and obtains an IV of the 8-byte random number (807), and then sends the IV of the 8-byte random number to the smart lock (808). When receiving the IV of the 8-byte random number, the smart lock generates CCK and IAK, encrypts the CCK and the IAK by using the CTK and the IV of the 8-byte random number, performs the MAC calculation to obtain the encrypted information including the MAC verification information (809), and then sends the encrypted information to the smart card (810). When receiving the encrypted information, the smart card adopts the CTK and the IV of the 8-byte random number to decrypt the encrypted information to obtain CCK and IAK. Then, the smart card performs MAC calculation on CCK and IAK to obtain MAC verification information (811), and when the MAC verification information is the same as the MAC verification information at the side of the smart lock, the smart card sends a verification success message to the smart lock (812), so that the smart lock adds the CID of the smart card to the white list (813).

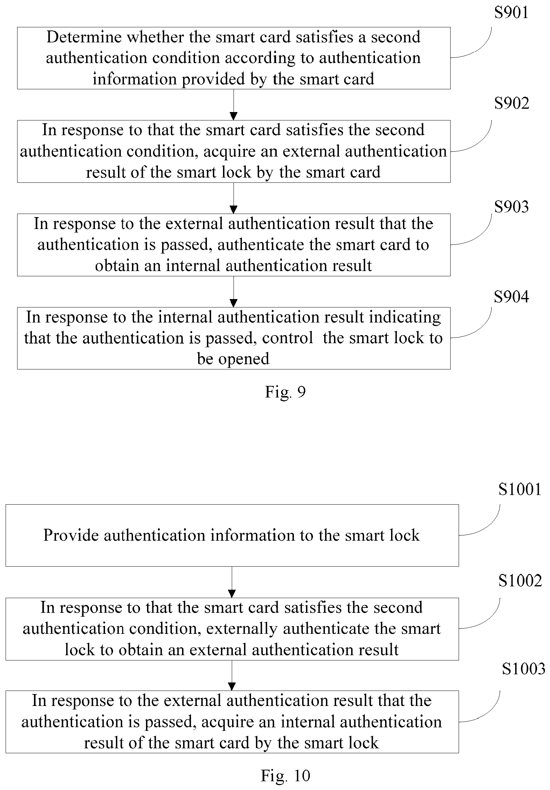

Fig. 9 is a flowchart of a method for authenticating a smart card according to an exemplary embodiment. As shown in Fig. 9, the unlocking authentication method is used in a smart lock, and includes the following steps.

In step S901, it is determined whether the smart card satisfies a second authentication condition according to authentication information provided by the smart card.

Based on the authentication information provided by the smart card, the smart lock needs to determine whether the smart card satisfies the second authentication condition, so that when the smart card satisfies the second authentication condition, the subsequent authentication process is performed. For example, the smart lock determines whether the smart card satisfies the second authentication condition, including but not limited to the following manner: the smart lock checks whether the card status in the authentication information is an unkeyed state, and checks whether the card identifier is a card of an authenticated smart card. If the card status is the unkeyed state, the process ends; and if the card status is the keyed status and the card identifier is the card identifier of the authenticated smart card, the smart lock determines that the smart card satisfies the second authentication condition.

In step S902, in response to that the smart card satisfies the second authentication condition, an external authentication result of the smart lock is acquired by the smart card.

When it is determined that the smart card satisfies the second authentication condition, the smart lock sends a second random number acquisition request to the smart card. When receiving the second random number acquisition request, the smart card generates a second random number according to the second random number acquisition request, and sends the second random number to the smart lock. When the second random number is received, the smart lock encrypts the second random number by using an external authentication key in the pre-stored unlocking key to obtain fourth encrypted information, and then sends the fourth encrypted information to the smart card.

When receiving the fourth encrypted information, the smart card decrypts the fourth encrypted information by using the external authentication key in the pre-stored unlocking key to obtain a second random number, and verifies the second random number obtained by the decryption according to the generated second random number to obtain an external authentication result. If the generated second random number is the same as the second random number obtained by the decryption, the external authentication result indicating that the authentication is passed is obtained; and if the generated second random number is different from the second random number obtained by the decryption, the external authentication result indicating that the authentication is failed is obtained.

In step S903, in response to the external authentication result that the authentication is passed, the smart card is authenticated to obtain an internal authentication result.

In response to the external authentication result that the authentication is passed, the smart lock generates a third random number, and sends the generated third random number to the smart card. When the third random number is received, the smart card adopts an internal authentication key in the pre-stored unlocking key to encrypt the third random number to obtain fifth encrypted information, and sends the fifth encrypted information to the smart lock. When the fifth encrypted information is received, the smart lock uses the internal authentication key in the pre-stored unlocking key to decrypt the encrypted information to obtain a third random number, and verifies the third random number obtained by the decryption according to the generated third random number to obtain an internal authentication result. If the generated third random number is the same as the third random number obtained by the decryption, the internal authentication result indicating that the authentication is passed is obtained; and if the generated third random number is different from the third random number obtained by the decryption, the internal authentication result indicating that the authentication is failed is obtained.

In step S904, in response to the internal authentication result indicating that the authentication is passed, the smart lock is controlled to be opened.

In response to the internal authentication result that the authentication is passed, the smart lock and the smart card confirm each other as a trusted device, thereby controlling the smart lock to be opened.

Corresponding to Fig. 9, the unlocking authentication method may also be applied to the smart card, and includes the following steps shown in Fig. 10.

In step S1001, authentication information is provided to the smart lock.

Based on the connection established with the smart card, the smart lock may send to the smart card an information acquisition instruction for providing the authentication information. When receiving the information acquisition instruction, the smart card acquires the authentication information and sends the authentication information to the smart lock. The authentication information includes the card identifier and the card status of the smart card. The card status includes both an unkeyed state and a keyed state.

In step S1002, in response to that the smart card satisfies the second authentication condition, the smart lock is externally authenticated to obtain an external authentication result.

In step S1003, in response to the external authentication result that the authentication is passed, an internal authentication result of the smart card by the smart lock is acquired.

The internal authentication result is used to control the smart lock to be opened when the authentication result is that the authentication is passed.

In the method provided by the embodiment of the present disclosure, when unlocking the smart lock, by interacting between the smart card and the smart lock, the authentication of the smart lock by the smart lock card and the authentication of the smart card by the smart lock are completed, and when the two authentication results are both that the authentication is passed, the smart lock is controlled to be unlocked. Based on the above unlocking authentication method, the malicious copy attack is effectively avoided, and the reliability and security of the smart lock are improved.

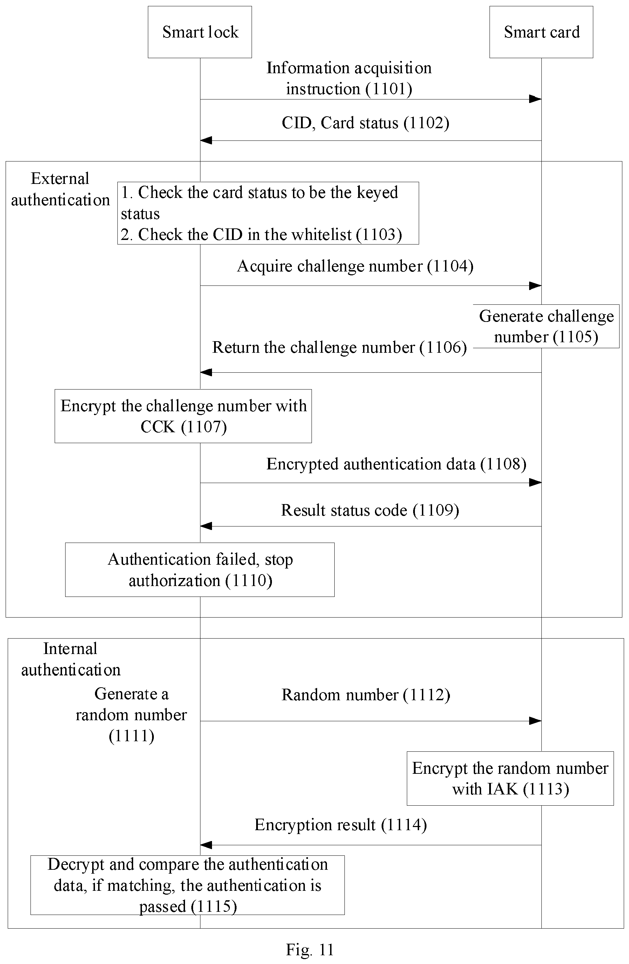

For the above-mentioned unlocking authentication method, the interaction process between the smart card and the smart lock will be described as an example in conjunction with Fig. 11.

Referring to Fig. 11, when receiving an information acquisition instruction for requesting authentication information (1101), the smart card acquires the CID and card status of the smart card, and sends the CID and the card status to the smart lock (1102). The smart lock checks whether the card status is the keyed state, and checks whether the CID is in the white list (1103). When the card status is the keyed state, and the CID is in the white list, the smart lock sends a challenge number acquisition request to the smart card (1104). When receiving the challenge number acquisition request, the smart card generates the challenge number (1105), and sends the generated challenge number to the smart lock (1106). The smart lock encrypts the challenge number by using the pre-stored CCK (1107), and sends the encrypted information to the smart card (1108). When receiving the encrypted information, the smart card decrypts the encrypted information by using the pre-stored CCK to obtain the challenge number, and according to the generated random number, verifies the random number obtained by the decryption and sends a verification result to the smart lock

(1109). When the generated random number and the random number obtained by the decryption are different, the authentication fails, and the authorization is stopped (1110). When the generated random number and the random number obtained by the decryption are the same, the authentication is successful, and the next step of authentication is continued. The smart lock generates a random number (1111) and sends the generated random number to the smart card (1112). The smart card encrypts the random number by using the pre-stored IAK to obtain the encrypted information (1113), and sends the encrypted information to the smart lock (1114). When receiving the encrypted information, the smart lock uses the pre-stored IAK to decrypt the encrypted information, acquires a random number, and verifies the random number acquired by the decryption according to the generated random number. When the generated random number is the same as the random number obtained by the decryption, the authentication is passed, and the smart lock is controlled to be opened (1115).

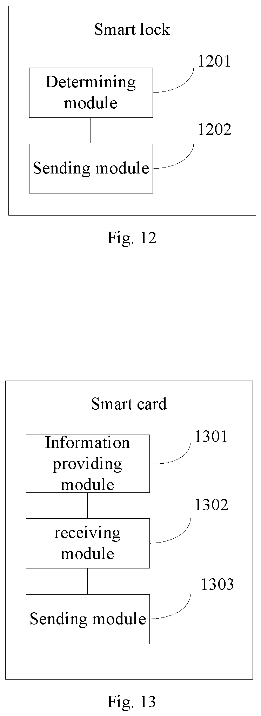

Fig. 12 is a block diagram of a smart lock according to an exemplary embodiment. Referring to Fig. 12, the smart lock includes a determining module 1201 and a sending module 1202.

The determining module 1201 is configured to determine, according to authentication information provided by the smart card, whether the smart card satisfies a first authentication condition.

The sending module 1202 is configured to send a generated unlocking key to the smart card in response to the determination that the smart card satisfies the first authentication condition.

The determining module 1201 is configured to determine the smart card as an authenticated smart card in response to receiving feedback information of the smart card.

In another embodiment of the present disclosure, the determining module 1201 is configured to acquire authentication information requested from the smart card, the authentication information including a card identifier and a card status of the smart card; and when the card status is determined to be an unkeyed state, and the card identifier includes a specified number segment, determine that the smart card satisfies the first authentication condition.

In another embodiment of the present disclosure, the smart lock further includes: an acquisition module, a verification module, and an encryption module.

The acquisition module is configured to acquire a digital certificate requested from the smart card.

The verification module is configured to verify the digital certificate to obtain a public key of the smart card.

The encryption module is configured to encrypt a generated unlocking key by using a public key.

The sending module 1202 is configured to send the encrypted unlocking key to the smart card.

The determining module 1201 is configured to determine the smart card as an authenticated smart card in response to receiving feedback information that the smart card successfully decrypts the encrypted unlocking key by using a private key corresponding to the public key.

In another embodiment of the present disclosure, the smart lock further includes: an acquisition module.

The sending module 1202 is configured to send the generated transport key to the smart card.

The acquisition module is configured to acquire a first random number generated by the smart card.

The sending module 1202 is configured to perform an encryption processing on the generated unlocking key based on the transport key and the first random number to obtain first encrypted information.

The sending module 1202 is configured to send the first encrypted information to the smart card.

The determining module 1201 is configured to determine the smart card as an authenticated smart card in response to receiving feedback information that the smart card decrypts and verifies the first encrypted information successfully.

In another embodiment of the present disclosure, the smart lock further includes: an acquisition module and a verification module.

The acquisition module is configured to acquire a digital certificate requested from the smart card.

The verification module is configured to verify the digital certificate to obtain a public key of the smart card.

The sending module 1202 is configured to encrypt the transport key by using a public key to obtain second encrypted information; and send the second encrypted information to the smart card.

In another embodiment of the present disclosure, the acquisition module is configured to receive the third encrypted information sent by the smart card, the third encrypted information being obtained by the smart card by using the transport key to encrypt the generated first random number; and use the transport key to decrypt the third encrypted information to obtain a first random number.

In another embodiment of the present disclosure, the smart lock further includes: a receiving module and a connection module.

The receiving module is configured to receive an authentication trigger instruction from a third-party application.

The connection module is configured to establish a connection with the smart card.

In another embodiment of the present disclosure, the smart lock further includes: an acquisition module, an authentication module, and a control module.

The determining module 1201 is configured to determine whether the smart card satisfies a second authentication condition.

The acquisition module is configured to acquire an external authentication result of the smart lock by the smart card in response to that the smart card satisfies the second authentication condition.

The authentication module is configured to authenticate the smart card in response to the external authentication result that the authentication is passed, and obtain an internal authentication result.

The control module is configured to control the smart lock to be opened in response to the internal authentication result that the authentication is passed.

In another embodiment of the present disclosure, the determining module 1201 is configured to acquire authentication information requested from the smart card, the authentication information including a card identifier and a card status of the smart card; and when the card status is determined to be a keyed state, and the card identification represents that the smart card is an authenticated smart card, determine that the smart card satisfies the second authentication condition.

In another embodiment of the present disclosure, the acquisition module is configured to send a second random number acquisition request to the smart card, the second random number acquisition request being used by the smart card for generating a second random number and returning the second random number; receive the second random number; encrypt the second random number by using an external authentication key in a pre-stored unlocking key to obtain fourth encrypted information; send the fourth encrypted information to the smart card, the fourth encrypted information being used by the smart card for using the external authentication key in the pre-stored unlocking key for decryption to obtain a second random number, and verifying the second random number to obtain an external authentication result and returning the external authentication result; and receive the external authentication result sent by the smart card.

In another embodiment of the present disclosure, the authentication module is configured to send the generated third random number to the smart card, the third random number being used by the smart card for encrypting using an internal authentication key in a pre-stored unlocking key, obtaining the fifth encrypted information and returning the fifth encrypted information; receive the fifth encrypted information; decrypt the fifth encrypted information by using the internal authentication key in the pre-stored unlocking key to obtain a third random number; and verify the third random number to obtain an internal certification result.

When determining that the smart card satisfies the first authentication condition according to the authentication information provided by the smart card, the smart lock provided by the embodiment of the present disclosure sends the generated unlocking key to the smart card, and performs verification by the smart card, and when receiving feedback of successful verification, the authentication of the smart card is completed. The process does not need to generate an unlocking key in advance, and the authentication is performed in real time based on the authentication information of the smart card and the unlocking key generated by the smart lock, thereby the authentication result is reliable and safe.

In addition, when unlocking the smart lock, by the interaction between the smart lock and the smart card, the authentication of the smart lock by the smart lock card and the authentication of the smart card by the smart lock are completed, and when the two authentication results are both that the authentication is passed, the smart lock is controlled to be opened. Based on the above unlocking authentication method, the malicious copy attack is effectively avoided, and the reliability and security of the smart lock are improved.

With regard to the smart locks in the above embodiments, the implementation manners in which the respective modules perform the operations have been described in detail in the embodiments relating to the method, and will not be explained in detail herein.

Fig. 13 is a block diagram of a smart card according to an exemplary embodiment. Referring to Fig. 13, the smart card includes: an information providing module 1301, a receiving module 1302, and a sending module 1303.

The information providing module 1301 is configured to provide authentication information to the smart lock.

The receiving module 1302 is configured to receive an unlocking key sent by the smart lock, where the unlocking key is sent by the smart lock when determining that the smart card satisfies the first authentication condition according to the authentication information.

The sending module 1303 is configured to send feedback information to the smart lock.

In another embodiment of the present disclosure, the information providing module 1301 is configured to provide the smart lock with the authentication information in response to the request instruction for the authentication information.

The authentication information includes a card identifier and a card status of the smart card, and the authentication information is used by the smart lock to determine that the smart card satisfies the first authentication condition when the card status is an unkeyed state and the card identifier includes the specified number segment.

In another embodiment of the present disclosure, the sending module 1303 is configured to send a digital certificate to the smart lock in response to a request for the digital certificate.

The digital certificate is verified by the smart lock to obtain a public key of the smart card, and the public key is used to encrypt the generated unlocking key.

The receiving module 1302 is configured to receive an encrypted unlocking key sent by the smart lock.

The smart card further includes: a decryption module.

The decryption module is configured to decrypt the encrypted unlocking key by a private key corresponding to the public key.

The sending module 1303 is configured to send feedback information of successful decryption to the smart lock.

In another embodiment of the present disclosure, the receiving module 1302 is configured to receive a transport key sent by the smart lock.

The sending module 1303 is configured to send the generated first random number to the smart lock.

The smart lock performs an encryption processing on the generated unlocking key based on the transport key and the first random number to obtain the first encrypted information and returns the first encrypted information.

The receiving module 1302 is configured to receive first encrypted information sent by the smart lock.

The sending module 1303 is configured to decrypt the first encrypted information based on the transport key and the generated first random number, and generate feedback information that the verification succeeds.

In another embodiment of the present disclosure, the sending module 1303 is configured to send the digital certificate to the smart lock in response to the request for the digital certificate. The digital certificate is verified by the smart lock to obtain the public key of the smart card. The public key is used to encrypt the generated transport key to obtain second encrypted information.

The receiving module 1302 is configured to receive the second encrypted information sent by the smart lock.

The smart card further includes: an acquisition module.

The acquisition module is configured to decrypt the second encrypted information by using a private key corresponding to the public key to obtain a transport key.

In another embodiment of the present disclosure, the sending module 1303 is configured to encrypt the generated first random number with the transport key to obtain third encrypted information; and send the third encrypted information to the smart lock.

In another embodiment of the present disclosure, the smart card further includes: an authentication module and an acquisition module.

The information providing module 1301 is configured to provide authentication information to the smart lock.

The authentication module is configured to externally authenticate the smart lock in response to the smart card satisfying the second authentication condition, and obtain an external authentication result.

The acquisition module is configured to acquire an internal authentication result of the smart lock to the smart card in response to the external authentication result that the authentication is passed, and when the internal authentication result is that the authentication is passed, the smart lock is controlled to be opened.

In another embodiment of the present disclosure, the information providing module 1301 is configured to send the authentication information to the smart lock in response to the request instruction for the authentication information.

The authentication information includes the card identifier and the card status of the smart card. The authentication information is used by the smart lock to determine that the smart card satisfies the second authentication condition when the smart card is in the keyed state and the card identifier is in the whitelist, the card identifier being in the whitelist representing that the smart card is the authenticated card.

In another embodiment of the present disclosure, the authentication module is configured to receive a second random number acquisition request sent by the smart lock; generate a second random number; and send the second random number to the smart lock, the second random number being encrypted by the smart lock using an external authentication key in a pre-stored unlocking key to obtain and return the fourth encrypted information; receive the fourth encrypted information; use the external authentication key in the pre-stored unlocking key to decrypt the fourth encrypted information to obtain a second random number; and verify the second random number according to the generated second random number to obtain an external authentication result.

In another embodiment of the present disclosure, the acquisition module is configured to receive a third random number sent by the smart lock; encrypt the third random number by using an internal authentication key in the pre-stored unlocking key to obtain fifth encrypted information; and send the fifth encrypted information to the smart lock, where the smart lock decrypts the fifth encrypted information by using the internal authentication key in the pre-stored unlocking key to obtain a third random number, and verify the third random number to obtain an internal certification result.

In the smart card provided by the embodiment of the present disclosure, by providing the smart lock with the authentication information, the smart lock is capable of determining whether the smart card satisfies the first authentication condition based on the authentication information, and when the smart card is determined to satisfy the first authentication condition, the generated unlocking key is sent to the smart card, and after receiving the unlocking key, the verification is performed, and the feedback information of the verification success is sent to the smart lock, thereby completing the authentication of the smart card. The process does not need to generate an unlocking key in advance, and the authentication is performed in real time based on the authentication information of the smart card and the unlocking key generated by the smart lock, and the authentication result reliable and safe.

In addition, when unlocking the smart lock, the smart lock is interacted with the smart card to complete the authentication of the smart lock by the smart lock card and the authentication of the smart card by the smart lock, and when the two authentication results are both that the authentication is passed, the smart lock is controlled to be opened. Based on the above unlocking authentication method, the malicious copy attack is effectively avoided, and the reliability and security of the smart lock are improved.

The embodiment of the present disclosure further provides a smart lock system, including the smart lock provided by any of the above embodiments, and at least one smart card provided by any of the above embodiments.

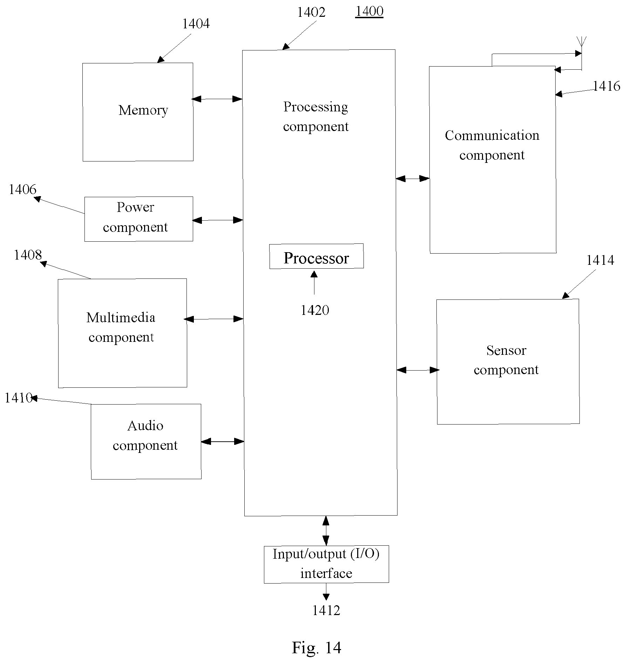

Fig. 14 is a block diagram of a device 1400 for authenticating a smart card, according to an exemplary embodiment. For example, the device 1400 may be a mobile phone, a computer, a digital broadcast terminal, a messaging device, a game console, a tablet, a medical device, exercise equipment, a personal digital assistant, and the like.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any application or method operated on the device 1400, contact data, phonebook data, messages, pictures, videos, etc. The memory 1404 may be implemented using any type of volatile or non-volatile storage devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include, but are not limited to, a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 4G, or 5G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the device 1400, for performing the above-described methods. For example, the non-transitory computer-readable storage medium may be a ROM, a RAM, a CD-ROM, a magnetic tape, a floppy disc, an optical data storage device, and the like.

In the device provided by the embodiment of the present disclosure, when it is determined that the smart card satisfies the first authentication condition based on the authentication information provided by the smart card, the generated unlocking key is sent to the smart card and is verified by the smart card, and when receiving the feedback of the successful verification, the authentication of the smart card is completed. The process does not need to generate an unlocking key in advance, and the authentication is performed in real time based on the authentication information of the smart card and the unlocking key generated by the smart lock, thus the authentication result is more reliable and safer.

In addition, when unlocking the smart lock, the smart lock is interacted with the smart card to complete the authentication of the smart lock by the smart lock card and the authentication of the smart card by the smart lock, and when the two authentication results are both that the authentication is passed, the smart lock is controlled to be opened. Based on the above unlocking authentication method, the malicious copy attack is effectively avoided, and the reliability and security of the smart lock are improved.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

## Claims

1. A computer implemented method for authenticating a smart card, comprising:
determining (S201,S401,S601), in a smart lock, whether the smart card satisfies a first authentication condition according to authentication information provided by the smart card;
in response to a determination by the smart lock that the smart card satisfies the first authentication condition, the smart lock sending (S202) a generated unlocking key to the smart card; and
in response to receiving feedback information of the smart card, the smart lock determining (S203) the smart card to be an authenticated smart card; wherein:
the determining (S201,S401,S601) whether the smart card satisfies the first authentication condition according to the authentication information provided by the smart card comprises:
acquiring the authentication information requested from the smart card, the authentication information comprising a card identifier and a card status of the smart card; and
when it is determined that the card status is an unkeyed state, and the card identifier comprises a specified number segment, determining that the smart card satisfies the first authentication condition.

2. The method according to claim 1, further comprising the smart lock:
acquiring (S402) a digital certificate requested from the smart card;
verifying (S403) the digital certificate to obtain a public key of the smart card; and
encrypting (S404) the generated unlocking key by using the public key;
wherein the sending (S202) the generated unlocking key to the smart card comprises:
sending (S405) the encrypted unlocking key to the smart card; and
the determining (S203) the smart card to be the authenticated smart card in response to receiving the feedback information of the smart card comprises:
in response to receiving feedback information that the smart card successfully decrypts the encrypted unlocking key by a private key corresponding to the public key, determining (S406) the smart card to be the authenticated smart card.

3. The method according to claim 1 or 2, wherein before (S202) sending the generated unlocking key to the smart card, the method further comprises the smart lock:
sending (S602) a generated transport key to the smart card; and
acquiring (S603) a first random number generated by the smart card;
the sending (S202) the generated unlocking key to the smart card comprises:
performing (S604) an encryption processing on the generated unlocking key based on the transport key and the first random number to obtain first encrypted information; and
sending (S605) the first encrypted information to the smart card; and
the determining (S203) the smart card to be the authenticated smart card in response to receiving the feedback information of the smart card, comprises:
in response to receiving feedback information that the smart card decrypts and verifies the first encrypted information successfully, determining (S606) the smart card to be the authenticated smart card.

4. The method according to claim 3, further comprising the smart lock:
acquiring (S402) a digital certificate requested from the smart card; and
verifying (S403) the digital certificate to obtain a public key of the smart card;
wherein the sending (S602) the generated transport key to the smart card comprises:
encrypting the transport key by using the public key to obtain second encrypted information; and
sending the second encrypted information to the smart card.

5. The method according to claim 3, wherein the acquiring (S603) the first random number of the smart card comprises:
receiving third encrypted information sent by the smart card, the third encrypted information being obtained by the smart card by using the transport key to encrypt the generated first random number; and
decrypting the third encrypted information by using the transport key to obtain the first random number.

6. The method according to any preceding claim, wherein before determining (S201,S401,S601) whether the smart card satisfies the first authentication condition, the method further comprises:
receiving an authentication trigger instruction from a third-party application; and
establishing a connection with the smart card.

7. The method according to any one of claims 1 to 6, wherein after determining (S203) the smart card to be authenticated, the method further comprises:
determining whether the smart card satisfies a second authentication condition;
in response to the determination that the smart card satisfies the second authentication condition, acquiring an external authentication result of the smart lock by the smart card;
in response to the external authentication result being that the authentication is passed, authenticating the smart card to obtain an internal authentication result; and
in response to the internal authentication result being that the authentication is passed, controlling the smart lock to be opened.

8. The method according to claim 7, wherein the determining whether the smart card satisfies the second authentication condition comprises:
acquiring the authentication information requested from the smart card, the authentication information comprising a card identifier and a card status of the smart card; and
when it is determined that the card status is a keyed state, and the card identifier indicates that the smart card is an authenticated smart card, determining that the smart card satisfies the second authentication condition.

9. The method according to claim 7 or 8, wherein the acquiring the external authentication result of the smart lock by the smart card in response to the determination that the smart card satisfies the second authentication condition, comprises:
sending a second random number acquisition request to the smart card, the second random number acquisition request being used by the smart card to generate and return a second random number;
receiving the second random number;
encrypting the second random number by using an external authentication key in a pre-stored unlocking key to obtain fourth encrypted information;
sending the fourth encrypted information to the smart card, the fourth encrypted information being used by the smart card to perform decryption using the external authentication key in the pre-stored unlocking key to obtain the second random number, and verifying the second random number to obtain and return the external authentication result; and
receiving the external authentication result sent by the smart card.

10. The method according to claim 7, 8, or 9, wherein the authenticating the smart card to obtain the internal authentication result in response to the external authentication result being that the authentication is passed, comprises:
sending the generated third random number to the smart card, the third random number being used by the smart card to perform encryption by using an internal authentication key in a pre-stored unlocking key to obtain and return fifth encrypted information;
receiving the fifth encrypted information;
decrypting the fifth encrypted information by using the internal authentication key in the pre-stored unlocking key to obtain the third random number; and
verifying the third random number to obtain the internal authentication result.

11. A computer implemented method for authenticating a smart card, comprising:
providing (S301,S501,S701) authentication information from a smart card to a smart lock in response to a request instruction for the authentication information;
determining (S201,S401,S601), in the smart lock, whether the smart card satisfies a first authentication condition according to the authentication information provided by the smart card;receiving (S302), by the smart card, an unlocking key sent by the smart lock, the unlocking key being sent by the smart lock when determining that the smart card satisfies the first authentication condition according to the authentication information; and
sending (S303), from the smart card, feedback information to the smart lock; wherein:
the determining (S201,S401,S601) whether the smart card satisfies the first authentication condition according to the authentication information provided by the smart card comprises:
acquiring the authentication information requested from the smart card, the authentication information comprising a card identifier and a card status of the smart card; and
when it is determined that the card status is an unkeyed state, and the card identifier comprises a specified number segment, determining that the smart card satisfies the first authentication condition

12. The method according to claim 11, further comprising:
in response to a request instruction for digital certificate, sending (S502), by the smart card, a digital certificate to the smart lock;
wherein the digital certificate is verified by the smart lock to obtain a public key of the smart card, and the public key is used to encrypt a generated unlocking key;
the receiving (S302) the unlocking key sent by the smart lock, comprises:
receiving (S503) an encrypted unlocking key sent by the smart lock;
the method further comprises:
decrypting (S504), by the smart card, the encrypted unlocking key by a private key corresponding to the public key; and
the sending (S502) the feedback information to the smart lock comprises:
sending (S505) feedback information of successful decryption to the smart lock.

13. A device for authenticating a smart card, comprising:
a processor (1420); and
a memory (1404) for storing instructions executable by the processor (1420);
wherein the processor (1420) is configured to perform the method for authenticating a smart card according to any one of claims 1-10.

14. A system for authenticating a smart card, comprising:
a smart card and a smart lock; wherein the smart card and the smart lock are adapted to perform the steps respectively performed by the smart card and the smart lock in the method for authenticating the smart card according to any one of claims 11 and 12

## Patentansprüche

1. Computerimplementiertes Verfahren zum Authentifizieren einer Smartcard, umfassend:
Bestimmen (S201, S401, S601), in einem inteligenten Schloss, ob die Smartcard eine erste Authentifizierungsbedingung gemäß von der Smartcard bereitgestellten Authentifizierungsinformationen erfüllt;
als Reaktion auf eine Bestimmung durch das inteligente Schloss, dass die Smartcard die erste Authentifizierungsbedingung erfüllt, Senden (S202), durch das inteligente Schloss, eines erzeugten Entriegelungsschlüssels an die Smartcard; und
als Reaktion auf Empfangen von Rückmeldungsinformationen von der Smartcard, Bestimmen (S203), durch das inteligente Schloss, dass die Smartcard eine authentifizierte Smartcard ist, wobei:
das Bestimmen (S201, S401, S601), ob die Smartcard die erste Authentifizierungsbedingung gemäß den von der Smartcard bereitgestellten Authentifizierungsinformationen erfüllt, Folgendes umfasst:
Erfassen der von der Smartcard angeforderten Authentifizierungsinformationen, wobei die Authentifizierungsinformationen eine Kartenkennung und einen Kartenstatus der Smartcard umfassen; und
wenn bestimmt wird, dass der Kartenstatus ein unverschlüsselter Zustand ist und die Kartenkennung ein bestimmtes Zahlensegment umfasst, Bestimmen, dass die Smartcard die erste Authentifizierungsbedingung erfüllt.

2. Verfahren nach Anspruch 1, weiter umfassend das inteligente Schloss zum:
Erfassen (S402) eines von der Smartcard angeforderten digitalen Zertifikats;
Überprüfen (S403) des digitalen Zertifikats, um einen öffentlichen Schlüssel der Smartcard zu erhalten; und
Verschlüsseln (S404) des erzeugten Entriegelungsschlüssels unter Verwendung des öffentlichen Schlüssels;
wobei das Senden (S202) des erzeugten Entriegelungsschlüssels an die Smartcard Folgendes umfasst:
Senden (S405) des verschlüsselten Entriegelungsschlüssels an die Smartcard; und
das Bestimmen (S203), dass die Smartcard die authentifizierte Smartcard ist, als Reaktion auf Empfangen der Rückmeldungsinformationen der Smartcard Folgendes umfasst:
als Reaktion auf Empfangen von Rückmeldungsinformation, dass die Smartcard den verschlüsselten Entriegelungsschlüssel erfolgreich durch einen privaten Schlüssel entschlüsselt, der dem öffentlichen Schlüssel entspricht, Bestimmen (S406), dass die Smartcard die authentifizierte Smartcard ist.

3. Verfahren nach Anspruch 1 oder 2, wobei vor (S202) dem Senden des erzeugten Entriegelungsschlüssels an die Smartcard das Verfahren weiter Folgendes umfasst:
Senden (S602) eines erzeugten Transportschlüssels an die Smartcard; und
Erfassen (S603) einer ersten, von der Smartcard erzeugten Zufallszahl;
wobei das Senden (S202) des erzeugten Entriegelungsschlüssels an die Smartcard Folgendes umfasst:
Durchführen (S604) einer Verschlüsselungsverarbeitung an dem erzeugten Entriegelungsschlüssel, basierend auf dem Transportschlüssel und der ersten Zufallszahl, um erste verschlüsselte Informationen zu erhalten; und
Senden (S605) der ersten verschlüsselten Informationen an die Smartcard; und
das Bestimmen (S203), dass die Smartcard die authentifizierte Smartcard ist, als Reaktion auf Empfangen der Rückmeldungsinformationen der Smartcard, Folgendes umfasst:
als Reaktion auf Empfangen von Rückmeldungsinformationen, dass die Smartcard die ersten verschlüsselten Informationen erfolgreich entschlüsselt und überprüft, Bestimmen (S606), dass die Smartcard die authentifizierte Smartcard ist.

4. Verfahren nach Anspruch 3, weiter umfassend das intelligente Schloss zum:
Erfassen (S402) eines von der Smartcard angeforderten digitalen Zertifikats; und
Überprüfen (S403) des digitalen Zertifikats, um einen öffentlichen Schlüssel der Smartcard zu erhalten;
wobei das Senden (S602) des generierten Transportschlüssels an die Smartcard Folgendes umfasst:
Verschlüsseln des Transportschlüssels unter Verwendung des öffentlichen Schlüssels, um zweite verschlüsselte Informationen zu erhalten; und
Senden der zweiten verschlüsselten Informationen an die Smartcard.

5. Verfahren nach Anspruch 3, wobei das Erfassen (S603) der ersten Zufallszahl der Smartcard Folgendes umfasst:
Empfangen dritter verschlüsselter Informationen, die von der Smartcard gesendet werden, wobei die dritten verschlüsselten Informationen von der Smartcard unter Verwendung des Transportschlüssels zum Verschlüsseln der erzeugten ersten Zufallszahl erhalten werden; und
Entschlüsseln der dritten verschlüsselten Informationen unter Verwendung des Transportschlüssels, um die erste Zufallszahl zu erhalten.

6. Verfahren nach einem vorstehenden Anspruch, wobei das Verfahren vor Bestimmen (S201, S401, S601), ob die Smartcard die erste Authentifizierungsbedingung erfüllt, weiter Folgendes umfasst:
Empfangen einer Authentifizierungsauslöseanweisung von einer Drittanwendung; und
Herstellen einer Verbindung mit der Smartcard.

7. Verfahren nach einem der Ansprüche 1 bis 6, wobei das Verfahren nach Bestimmen (S203) der zu authentifizierenden Smartcard weiter Folgendes umfasst:
Bestimmen, ob die Smartcard eine zweite Authentifizierungsbedingung erfüllt;
als Reaktion auf die Bestimmung, dass die Smartcard die zweite Authentifizierungsbedingung erfüllt, Erfassen eines externen Authentifizierungsergebnisses des inteligenten Schlosses durch die Smartcard;
als Reaktion darauf, dass das externe Authentifizierungsergebnis besagt, dass die Authentifizierung bestanden wurde, Authentifizieren der Smartcard, um ein internes Authentifizierungsergebnis zu erhalten; und
als Reaktion darauf, dass das Ergebnis der internen Authentifizierung besagt, dass die Authentifizierung bestanden wurde, Steuern des inteligenten Schlosses, sich zu öffnen.

8. Verfahren nach Anspruch 7, wobei das Bestimmen, ob die Smartcard die zweite Authentifizierungsbedingung erfüllt, Folgendes umfasst:
Erfassen der von der Smartcard angeforderten Authentifizierungsinformationen, wobei die Authentifizierungsinformationen eine Kartenkennung und einen Kartenstatus der Smartcard umfassen; und
wenn bestimmt wird, dass der Kartenstatus ein verschlüsselter Zustand ist und die Kartenkennung angibt, dass es sich bei der Smartcard um eine authentifizierte Smartcard handelt, Bestimmen, dass die Smartcard die zweite Authentifizierungsbedingung erfüllt.

9. Verfahren nach Anspruch 7 oder 8, wobei das Erfassen des externen Authentifizierungsergebnisses des inteligenten Schlosses durch die Smartcard als Reaktion auf die Bestimmung, dass die Smartcard die zweite Authentifizierungsbedingung erfüllt, Folgendes umfasst:
Senden einer Erfassungsanforderung für eine zweite Zufallszahl an die Smartcard, wobei die Erfassungsanforderung für eine zweite Zufallszahl von der Smartcard verwendet wird, um eine zweite Zufallszahl zu erzeugen und zurückzugeben;
Empfangen der zweiten Zufallszahl;
Verschlüsseln der zweiten Zufallszahl unter Verwendung eines externen Authentifizierungsschlüssels in einem vorab gespeicherten Entriegelungsschlüssel, um vierte verschlüsselte Informationen zu erhalten;
Senden der vierten verschlüsselten Informationen an die Smartcard, wobei die vierten verschlüsselten Informationen von der Smartcard verwendet werden, um Entschlüsselung unter Verwendung des externen Authentifizierungsschlüssels im vorab gespeicherten Entriegelungsschlüssel durchzuführen, um die zweite Zufallszahl zu erhalten, und Überprüfen der zweiten Zufallszahl, um das externe Authentifizierungsergebnis zu erhalten und zurückzugeben; und
Empfangen des von der Smartcard gesendeten externen Authentifizierungsergebnisses.

10. Verfahren nach Anspruch 7, 8 oder 9, wobei das Authentifizieren der Smartcard, um das interne Authentifizierungsergebnis als Reaktion darauf, dass das externe Authentifizierungsergebnis besagt, dass die Authentifizierung bestanden wurde, zu erhalten, Folgendes umfasst:
Senden der erzeugten dritten Zufallszahl an die Smartcard, wobei die dritte Zufallszahl von der Smartcard verwendet wird, um Verschlüsselung unter Verwendung eines internen Authentifizierungsschlüssels in einem vorab gespeicherten Entriegelungsschlüssel durchzuführen, um fünfte verschlüsselte Informationen zu erhalten und zurückzugeben;
Empfangen der fünften verschlüsselten Informationen;
Entschlüsseln der fünften verschlüsselten Informationen unter Verwendung des internen Authentifizierungsschlüssels im vorab gespeicherten Entriegelungsschlüssel, um die dritte Zufallszahl zu erhalten; und
Überprüfen der dritten Zufallszahl, um das interne Authentifizierungsergebnis zu erhalten.

11. Computerimplementiertes Verfahren zum Authentifizieren einer Smartcard, umfassend:
Bereitstellen (S301, S501, S701) von Authentifizierungsinformationen von einer Smartcard an ein inteligentes Schloss als Reaktion auf eine Anforderungsanweisung für die Authentifizierungsinformationen;
Bestimmen (S201, S401, S601), im inteligenten Schloss, ob die Smartcard eine erste Authentifizierungsbedingung gemäß den von der Smartcard bereitgestellten Authentifizierungsinformationen erfüllt; Empfangen (S302), durch die Smartcard, eines vom inteligenten Schloss gesendeten Entriegelungsschlüssels, wobei der Entriegelungsschlüssel vom inteligenten Schloss gesendet wird, wenn bestimmt wird, dass die Smartcard die erste Authentifizierungsbedingung gemäß den Authentifizierungsinformationen erfüllt; und
Senden (S303), von der Smartcard, von Rückmeldungsinformationen an das inteligente Schloss; wobei:
das Bestimmen (S201, S401, S601), ob die Smartcard die erste Authentifizierungsbedingung gemäß den von der Smartcard bereitgestellten Authentifizierungsinformationen erfüllt, Folgendes umfasst:
Erfassen der von der Smartcard angeforderten Authentifizierungsinformationen, wobei die Authentifizierungsinformationen eine Kartenkennung und einen Kartenstatus der Smartcard umfassen; und
wenn bestimmt wird, dass der Kartenstatus ein unverschlüsselter Zustand ist und die Kartenkennung ein bestimmtes Zahlensegment umfasst, Bestimmen, dass die Smartcard die erste Authentifizierungsbedingung erfüllt.

12. Verfahren nach Anspruch 11, weiter umfassend:
als Reaktion auf eine Anforderungsanweisung für ein digitales Zertifikat, Senden (S502), durch die Smartcard, eines digitalen Zertifikats an das inteligente Schloss;
wobei das digitale Zertifikat vom inteligenten Schloss überprüft wird, um einen öffentlichen Schlüssel der Smartcard zu erhalten, und der öffentliche Schlüssel verwendet wird, um einen erzeugten Entriegelungsschlüssels zu verschlüsseln;
wobei das Empfangen (S302) des vom inteligenten Schloss gesendeten Entriegelungsschlüssels Folgendes umfasst:
Empfangen (S503) eines vom inteligenten Schloss gesendeten verschlüsselten Entriegelungsschlüssels;
wobei das Verfahren weiter umfasst:
Entschlüsseln (S504), durch die Smartcard, des verschlüsselten Entriegelungsschlüssels mit einem privaten Schlüssel, der dem öffentlichen Schlüssel entspricht; und
das Senden (S502) der Rückmeldungsinformationen an das inteligente Schloss umfasst:
Senden (S505) von Rückmeldungsinformationen über eine erfolgreiche Entschlüsselung an das inteligente Schloss.

13. Vorrichtung zum Authentifizieren einer Smartcard, umfassend:
einen Prozessor (1420); und
einen Speicher (1404) zum Speichern von Anweisungen, die vom Prozessor (1420) ausführbar sind;
wobei der Prozessor (1420) so konfiguriert ist, dass er das Verfahren zum Authentifizieren einer Smartcard nach einem der Ansprüche 1-10 durchführt.

14. System zum Authentifizieren einer Smartcard, umfassend:
eine Smartcard und ein inteligentes Schloss; wobei die Smartcard und das inteligente Schloss dazu ausgelegt sind, die Schritte durchzuführen, die jeweils von der Smartcard und dem inteligenten Schloss im Verfahren zum Authentifizieren der Smartcard nach einem der Ansprüche 11 und 12 durchgeführt werden.

## Revendications

1. Procédé mis en oeuvre par ordinateur pour authentifier une carte intelligente, comprenant l'étape consistant à :
déterminer (S201, S401, S601), dans un verrou intelligent, si la carte intelligente satisfait à une première condition d'authentification selon des informations d'authentification fournies par la carte intelligente ;
en réponse à une détermination par le verrou intelligent que la carte intelligente satisfait à la première condition d'authentification, le verrou intelligent envoyant (S202) une clé de déverrouillage générée à la carte intelligente ; et
en réponse à la réception d'informations de retour de la carte intelligente, le verrou intelligent déterminant (S203) que la carte intelligente est une carte intelligente authentifiée ; dans lequel :
la détermination (S201, S401, S601) si la carte intelligente satisfait ou non à la première condition d'authentification selon les informations d'authentification fournies par la carte intelligente comprend les étapes consistant à :
acquérir les informations d'authentification demandées à partir de la carte intelligente, les informations d'authentification comprenant un identifiant de carte et un état de carte de la carte intelligente ; et
lorsqu'il est déterminé que l'état de la carte est un état sans clé, et que l'identifiant de carte comprend un segment de nombre spécifié, déterminer que la carte intelligente satisfait à la première condition d'authentification.

2. Procédé selon la revendication 1, comprenant en outre le verrou intelligent qui :
acquiert (S402) un certificat numérique demandé à partir de la carte intelligente ;
vérifie (S403) le certificat numérique pour obtenir une clé publique de la carte intelligente ; et
chiffre (S404) la clé de déverrouillage générée en utilisant la clé publique ;
dans lequel l'envoi (S202) de la clé de déverrouillage générée à la carte intelligente comprend l'étape consistant à :
envoyer (S405) la clé de déverrouillage chiffrée à la carte intelligente ; et
la détermination (S203) de la carte intelligente comme étant la carte intelligente authentifiée en réponse à la réception des informations de retour de la carte intelligente comprend l'étape consistant à :
en réponse à la réception d'informations de retour selon lesquelles la carte intelligente déchiffre avec succès la clé de déverrouillage chiffrée par l'intermédiaire d'une clé privée correspondant à la clé publique, déterminer (S406) la carte intelligente comme étant la carte intelligente authentifiée.

3. Procédé selon la revendication 1 ou 2, dans lequel avant l'envoi (S202) de la clé de déverrouillage générée à la carte intelligente, le procédé comprend en outre le verrou intelligent qui :
envoie (S602) une clé de transport générée à la carte intelligente ; et
acquiert (S603) un premier nombre aléatoire généré par la carte intelligente ;
l'envoi (S202) de la clé de déverrouillage générée à la carte intelligente comprend les étapes consistant à :
effectuer (S604) un traitement de chiffrement sur la clé de déverrouillage générée sur la base de la clé de transport et du premier nombre aléatoire pour obtenir des premières informations chiffrées ; et
envoyer (S605) les premières informations chiffrées à la carte intelligente ; et
la détermination (S203) de la carte intelligente comme étant la carte intelligente authentifiée en réponse à la réception des informations de retour de la carte intelligente comprend l'étape consistant à :
en réponse à la réception d'informations de retour indiquant que la carte intelligente déchiffre et vérifie avec succès les premières informations chiffrées, déterminer (S606) la carte intelligente comme étant la carte intelligente authentifiée.

4. Procédé selon la revendication 3, comprenant en outre le verrou intelligent qui :
acquiert (S402) un certificat numérique demandé à partir de la carte intelligente ; et
vérifie (S403) le certificat numérique pour obtenir une clé publique de la carte intelligente ;
dans lequel l'envoi (S602) de la clé de transport générée à la carte intelligente comprend les étapes consistant à :
chiffrer la clé de transport en utilisant la clé publique pour obtenir des deuxièmes informations chiffrées ; et
envoyer les deuxièmes informations chiffrées à la carte intelligente.

5. Procédé selon la revendication 3, dans lequel l'acquisition (S603) du premier nombre aléatoire de la carte intelligente comprend les étapes consistant à :
recevoir des troisièmes informations chiffrées envoyées par la carte intelligente, les troisièmes informations chiffrées étant obtenues par la carte intelligente en utilisant la clé de transport pour chiffrer le premier nombre aléatoire généré ; et
déchiffrer les troisièmes informations cryptées en utilisant la clé de transport pour obtenir le premier nombre aléatoire.

6. Procédé selon une quelconque revendication précédente, dans lequel avant de déterminer (S201, S401, S601) si la carte intelligente satisfait ou non à la première condition d'authentification, le procédé comprend en outre les étapes consistant à :
recevoir une instruction de déclenchement d'authentification à partir d'une application tierce ; et
établir une connexion avec la carte intelligente.

7. Procédé selon l'une quelconque des revendications 1 à 6, dans lequel après avoir déterminé (S203) la carte intelligente à authentifier, le procédé comprend en outre les étapes consistant à :
déterminer si la carte intelligente satisfait ou non à une seconde condition d'authentification ;
en réponse à la détermination que la carte intelligente satisfait à la seconde condition d'authentification, acquérir un résultat d'authentification externe du verrou intelligent par la carte intelligente ;
en réponse au résultat d'authentification externe indiquant que l'authentification est réussie, authentifier la carte intelligente pour obtenir un résultat d'authentification interne ; et
en réponse au résultat d'authentification interne étant que l'authentification est réussie, commander l'ouverture du verrou intelligent.

8. Procédé selon la revendication 7, dans lequel l'action de déterminer si la carte intelligente satisfait ou non à la seconde condition d'authentification comprend les étapes consistant à :
acquérir les informations d'authentification demandées à partir de la carte intelligente, les informations d'authentification comprenant un identifiant de carte et un état de carte de la carte intelligente ; et
lorsqu'il est déterminé que l'état de la carte est un état à clé, et que l'identifiant de carte indique que la carte intelligente est une carte intelligente authentifiée, déterminer que la carte intelligente satisfait à la seconde condition d'authentification.

9. Procédé selon la revendication 7 ou 8, dans lequel l'acquisition du résultat d'authentification externe du verrou intelligent par la carte intelligente en réponse à la détermination que la carte intelligente satisfait à la seconde condition d'authentification comprend les étapes consistant à :
envoyer une seconde demande d'acquisition de nombre aléatoire à la carte intelligente, la seconde demande d'acquisition de nombre aléatoire étant utilisée par la carte intelligente pour générer et renvoyer un deuxième nombre aléatoire ;
recevoir le deuxième nombre aléatoire ;
chiffrer le deuxième nombre aléatoire en utilisant une clé d'authentification externe dans une clé de déverrouillage préstockée pour obtenir des quatrièmes informations chiffrées ;
envoyer les quatrièmes informations chiffrées à la carte intelligente, les quatrièmes informations chiffrées étant utilisées par la carte intelligente pour effectuer un déchiffrement à l'aide de la clé d'authentification externe dans la clé de déverrouillage préstockée pour obtenir le deuxième nombre aléatoire, et vérifier le deuxième nombre aléatoire pour obtenir et renvoyer le résultat d'authentification externe ; et
recevoir le résultat d'authentification externe envoyé par la carte intelligente.

10. Procédé selon la revendication 7, 8 ou 9, dans lequel l'authentification de la carte intelligente pour obtenir le résultat d'authentification interne en réponse au résultat d'authentification externe indiquant que l'authentification est réussie comprend les étapes consistant à :
envoyer le troisième nombre aléatoire généré à la carte intelligente, le troisième nombre aléatoire étant utilisé par la carte intelligente pour effectuer un chiffrement en utilisant une clé d'authentification interne dans une clé de déverrouillage pré-stockée pour obtenir et renvoyer des cinquièmes informations chiffrées ;
recevoir les cinquièmes informations chiffrées ;
déchiffrer les cinquièmes informations chiffrées en utilisant la clé d'authentification interne dans la clé de déverrouillage pré-stockée pour obtenir le troisième nombre aléatoire ; et
vérifier le troisième nombre aléatoire pour obtenir le résultat d'authentification interne.

11. Procédé mis en oeuvre par ordinateur pour authentifier une carte intelligente, comprenant l'étape consistant à :
fournir (S301, S501, S701) des informations d'authentification d'une carte intelligente à un verrou intelligent en réponse à une instruction de demande pour les informations d'authentification ;
déterminer (S201, S401, S601), dans le verrou intelligent, si la carte intelligente satisfait ou non à une première condition d'authentification selon les informations d'authentification fournies par la carte intelligente ; recevoir (S302), par l'intermédiaire de la carte intelligente, une clé de déverrouillage envoyée par le verrou intelligent, la clé de déverrouillage étant envoyée par le verrou intelligent lors de la détermination que la carte intelligente satisfait à la première condition d'authentification selon les informations d'authentification ; et
envoyer (S303), à partir de la carte intelligente, des informations de retour au verrou intelligent ; dans lequel :
la détermination (S201, S401, S601) si la carte intelligente satisfait ou non à la première condition d'authentification selon les informations d'authentification fournies par la carte intelligente comprend les étapes consistant à :
acquérir les informations d'authentification demandées à partir de la carte intelligente, les informations d'authentification comprenant un identifiant de carte et un état de carte de la carte intelligente ; et
lorsqu'il est déterminé que l'état de carte est un état sans clé, et que l'identifiant de carte comprend un segment de nombre spécifié, déterminer que la carte intelligente satisfait à la première condition d'authentification.

12. Procédé selon la revendication 11, comprenant en outre l'étape consistant à :
en réponse à une instruction de demande de certificat numérique, envoyer (S502), par l'intermédiaire de la carte intelligente, un certificat numérique au verrou intelligent ;
dans lequel le certificat numérique est vérifié par le verrou intelligent pour obtenir une clé publique de la carte intelligente, et la clé publique est utilisée pour chiffrer une clé de déverrouillage générée ;
la réception (S302) de la clé de déverrouillage envoyée par le verrou intelligent comprend l'étape consistant à :
recevoir (S503) une clé de déverrouillage chiffrée envoyée par le verrou intelligent ;
le procédé comprend en outre l'étape consistant à :
déchiffrer (S504), par l'intermédiaire de la carte intelligente, la clé de déverrouillage chiffrée par l'intermédiaire d'une clé privée correspondant à la clé publique ; et
envoyer (S502) des informations de retour au verrou intelligent comprend l'étape consistant à :
envoyer (S505) des informations de retour de déchiffrement réussi au verrou intelligent.

13. Dispositif d'authentification d'une carte intelligente, comprenant :
un processeur (1420) ; et
une mémoire (1404) pour stocker des instructions exécutables par le processeur(1420) ;
dans lequel le processeur (1420) est configuré pour effectuer le procédé d'authentification d'une carte intelligente selon l'une quelconque des revendications 1-10.

14. Système pour authentifier une carte intelligente, comprenant :
une carte intelligente et un verrou intelligent ; dans lequel la carte intelligente et le verrou intelligent sont adaptés pour effectuer les étapes respectivement effectuées par la carte intelligente et le verrou intelligent dans le procédé d'authentification de la carte intelligente selon l'une quelconque des revendications 11 et 12.
